# FASCICULE DE BREVET EUROPEEN

(11) **EP 0 419 506 B1**
(45) Date de publication et mention de la délivrance du brevet: **04.08.1993**
(21) Numéro de dépôt: 89906088.3
(22) Date de dépôt: 27.05.1989
(51) Int. Cl.: B01D 15/08

(54) **REPARTITEUR DE FLUIDE ET DISPOSITIF DE TRAITEMENT DE FLUIDE TEL QU'UN CHROMATOGRAPHE EQUIPE D'UN TEL REPARTITEUR**
FLÜSSIGKEITSVERTEILER UND FLÜSSIGKEITSBEHANDLUNGSVORRICHTUNG SOWIE EIN MIT EINEM SOLCHEN VERTEILER VERSEHENER CHROMATOGRAPH
FLUID DISTRIBUTOR AND DEVICE FOR TREATING A FLUID, SUCH AS A CHROMOTOGRAPH EQUIPPED WITH SAID DISTRIBUTOR

(30) Priorité: 03.06.1988 FR 8807413
(43) Date de publication de la demande: 03.04.1991
(73) Titulaire: Société BIOPASS, F-63100 Clermont-Ferrand (FR)
(72) Inventeur: CHABROL, Daniel, F-93250 Villemomble (FR); LEPLANG, Michel, F-94350 Villiers-sur-Marne (FR)
(74) Mandataire: Ropital-Bonvarlet, Claude
(86) Numéro de dépôt international: EP8900593
(87) Numéro de publication internationale: WO8911901

(56) Documents cités:
- EP-A- 0 108 242
- GB-A- 2 085 614
- US-A- 3 966 609
- US-A- 4 582 608

## Description

La présente invention est relative à un répartiteur de fluide, destiné à assurer une répartition uniforme des pressions et débits dans la section d'un écoulement dudit fluide, ainsi qu'à un dispositif de traitement d'un fluide équipé d'un tel répartiteur, et utilisé notamment en chromatographie.

Les techniques chromatographiques connaissent actuellement un succès croissant, en particulier celles selon lesquelles on fait passer un liquide à travers une masse de billes de matière poreuse, afin de séparer des composants contenus dans ce liquide. Parmi les applications les plus importantes, on peut citer le traitement du sang, ainsi que de nombreux procédés du domaine des biotechnologies. La progression des techniques amène à utiliser des colonnes de chromatographie de taille de plus en plus. importante, pouvant atteindre un diamètre de l'ordre du mètre, et une hauteur de 0,9 mètre. La matière nécessaire pour la chromatographie, qui est formée pour les faibles pressions de billes de diamètre 20 à 200 micromètres, en gélatine spongieuse, et pour les hautes pressions de particules de formes et dimensions analogues en silice, est très coûteuse. Il est donc nécessaire de l'utiliser au mieux et ceci impose que la répartition du courant de fluide à travers ces colonnes importantes soit aussi uniforme que possible.

Habituellement, les colonnes de chromatographie sont constituées d'une enceinte cylindrique, verticale, généralement en verre, fermée à ses extrémités inférieure et supérieure par un répartiteur comportant un séparateur formé d'une plaque de matière poreuse à porosité ouverte, par exemple du polypropylène fritté, et une plaque répartitrice, qui vient en appui sur le séparateur et comporte au moins un canal sur sa face tournée vers le séparateur, cette plaque étant traversée par au moins un conduit reliant ledit canal, ou lesdits canaux, à un conduit d'alimentation unique situé sur la face opposée.

Dans la réalisation la plus courante, telle que décrite par exemple dans la demande de brevet GB-A-2 085 614, le conduit est central, et les canaux partent en divergent du centre vers la périphérie, en se ramifiant, de façon à offrir, sensiblement sur toute la surface de la plaque, un rapport à peu près constant entre les aires consacrées à l'écoulement du fluide et celles qui servent à soutenir le séparateur. La profondeur, ou la largeur des rainures, doit augmenter lorsqu'on s'approche du centre, de façon à assurer un écoulement régulier du liquide. Il en résulte que l'obtention de telles pièces, qui se fait habituellement par moulage, est très coûteuse. En effet, l'usinage d'un moule convenable dans un acier très résistant est difficile à obtenir et demande beaucoup de temps et de soin. Un moule imparfait aboutit à des défauts dans la plaque, qui peuvent entraîner des difficultés de nettoyage.

La présente invention a pour but de fournir un répartiteur dans lequel l'obtention de la plaque répartitrice soit beaucoup plus simple, et d'un prix de revient beaucoup plus abordable.

Un autre but de l'invention est de fournir un dispositif de traitement de fluide, tel qu'un chromatographe, dans lequel les démontages et réglages soient faciles et rapides.

Pour obtenir ce résultat, l'invention fournit un répartiteur de fluide destiné à assurer une répartition uniforme des pressions et débits sur la section d'un écoulement dudit fluide, ce répartiteur comportant un séparateur (20), formé d'une plaque de matière poreuse à porosité ouverte, et une plaque répartitrice circulaire (21), en appui sur le séparateur comportant au moins un canal ouvert sur sa face tournée vers le séparateur et étant traversée par un ou plusieurs conduits reliant ledit canal ou lesdits canaux à une conduite d'alimentation ou d'évacuation unique située sur la face opposée, le ou lesdits conduits (34 à 43) reliant les canaux à la conduite d'alimentation ou d'évacuation introduisant entre ladite conduite et le canal correspondant, une perte de charge, inversement proportionnelle à l'aire du canal correspondant, mesurée sur la surface du séparateur, caractérisé en ce que lesdits canaux sont circulaires, concentriques, distincts et séparés les uns des autres par des surfaces d'appui (22 à 27) du séparateur (20), les conduits reliant les canaux à la conduite d'alimentation ou d'évacuation comprennent des rainures (34, 36, 38, 40, 42) en étoile creusées dans la face de la plaque répartitrice qui est opposée au séparateur, ces rainures étant recouvertes par une plaque d'appui (5) en contact avec la plaque répartitrice, et les conduits comprennent, en outre, des passages (35, 37, 39, 41, 43) perpendiculaires à la plaque répartitrice, débouchant d'un côté dans une rainure et de l'autre côté dans un canal.

Avantageusement, ces passages ont une section plus faible que les rainures dans lesquelles ils débouchent.

Là encore, on voit qu'il s'agit de forme simple, et d'obtention facile. On notera qu'il n'est pas necessaire que la profondeur des rainures varie en s'écartant du centre, ni même qu'elle varie d'une rainure à l'autre, puisque la perte de charge est obtenue principalement à l'aide des passages qui traversent la plaque.

Suivant une modalité intéressante, les passages sont pourvus d'ajustages interchangeables, pour permettre d'ajuster la perte de charge dans le conduit correspondant. On peut ainsi, avec une même plaque, tenir compte des viscosités différentes des fluides à traiter.

Avantageusement, les aires des canaux de la plaque répartitrice sont égales entre elles, et les pertes de charge introduites par les conduits sont égales entre elles.

Pour obtenir un dispositif de traitement d'un fluide, comme un dispositif de traitement par chromatographie, on prévoit avantageusement une enceinte cylindrique fermée à ses extrémités par deux répartiteurs du type ci-dessus, ces répartiteurs étant disposés avec leur séparation en vis-à-vis.

Pour faciliter le démontage et le réglage des dimensions d'une telle enceinte, on a trouvé avantageux que le répartiteur soit fixé sur une plaque d'appui pourvue d'un joint gonflable assurant l'étanchéité avec la paroi latérale de l'enceinte.

Dans les dispositifs de l'art antérieur, l'étanchéité entre chaque répartiteur et la paroi latérale de l'enceinte est obtenue par écrasement d'un joint torique. Une telle solution est difficilement applicable pour des diamètres importants, car il faut alors prévoir des forces considérables pour écraser le joint torique de façon convenable, et/ou prévoir une très grande précision sur le diamètre du répartiteur et de la paroi intérieure de l'enceinte. En outre, une obliguité même faible du plan du répartiteur par rapport à l'axe de l'enceinte peut mettre en défaut l'étanchéité. L'emploi d'un joint convenable ne met pas en jeu de forces importantes. En outre, sa grande latitude de déformation permet des tolérances dimensionnelles beaucoup plus larges.

Pour obtenir, dans un chromatographe de grand diamètre disposé verticalement, un serrage gonflable de la masse de matière pour chromatographie qui remplit l'espace compris entre les deux séparateurs, il est avantageusement prévu que les répartiteurs supérieurs sont fixés sur une plaque qui peut être portée par une tige de soutien centrale, avec un jeu qui correspond à la compressibilité de la masse de matière pour chromatographie, et des poussoirs verticaux, disposés vers la périphérie de cette plaque, assurent le serrage désiré, et régulier, de ladite masse.

L'invention va être décrite à l'aide d'un exemple pratique, illustré à l'aide des dessins.
Figure 1 est une vue d'ensemble partiellement en coupe, d'une colonne selon l'invention,
Figure 2 est une coupe partielle, à plus grande échelle d'un distributeur selon l'invention,
Figures 3 et 4 sont des vues partielles, respectivement de dessus et de dessous, de la plaque répartitrice du répartiteur de la figure 2,
Figure 5 représente une réalisation préférentielle de la présente invention.

Le chromatographe décrit aux figures est un appareil de grandes dimensions, d'un diamètre d'environ 450 mm, cette dimension étant donnée à titre d'exemple, et d'une hauteur comparable. De tels appareils sont utilisés pour la séparation d'un composant d'un liquide, par exemple la séparation du sérum contenu dans le sang. La faiblesse du rapport hauteur/diamètre impose, à l'évidence, une très bonne répartition du flux de liquide sur toute la section.

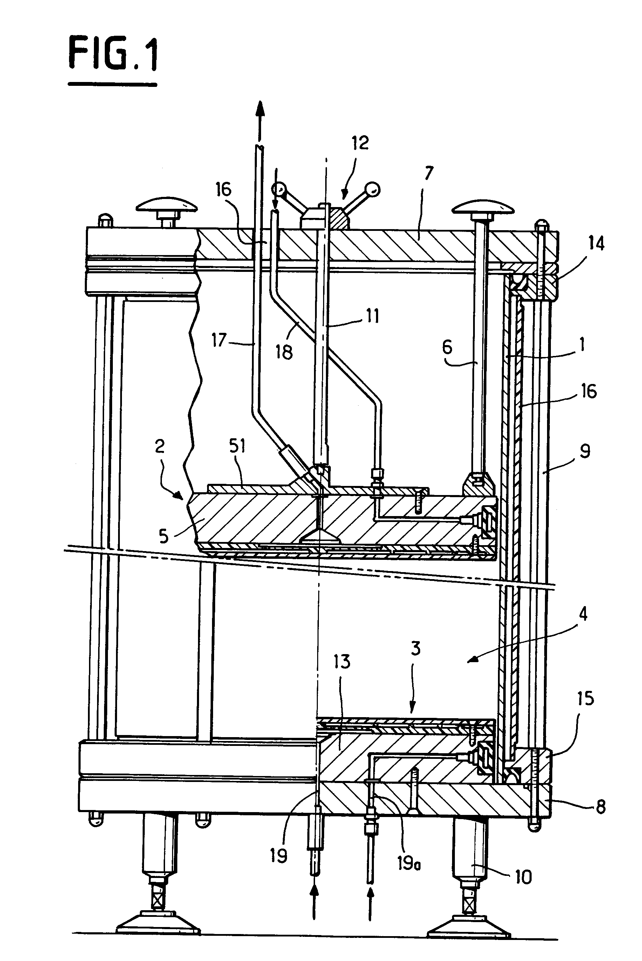

Le chromatographe visible dans son ensemble à la figure 1 comprend un tube cylindrique de révolution 1, disposé verticalement, un répartiteur supérieur 2, et un répartiteur inférieur 3, l'espace 4 défini par ces deux répartiteurs constituant la chambre de travail, qui est remplie d'une masse de billes de gélatine poreuse, qui constitue, dans le cas présent, le matériau de séparation.

Le répartiteur supérieur 2 est fixé sur une plaque d'appui 5, et constitue avec elle un piston mobile à l'intérieur du tube 1, ce qui permet d'adapter sa position au volume exact de billes mises en place dans l'espace 4. Des poussoirs 6, régulièrement répartis le long de la périphérie de la plaque d'appui 5, permettent d'exercer la pression convenable sur la masse des billes. Ces poussoirs prennent appui, grâce à un filetage, sur une plaque d'extrémité supérieure 7, qui surmonte le tube 1. La plaque d'extrémité 7 est elle-même reliée à une plaque d'extrémité inférieure 8 par une série de tirants 9 régulièrement répartis, disposés à l'extérieur du tube 1. La plaque d'extrémité inférieure 8 porte des pieds 10 qui supportent l'ensemble de l'appareil. Lors des démontages et remontages de l'appareil, le poids et les grandes dimensions du piston constitué par le répartiteur supérieur 2 et sa plaque d'appui rendent sa manipulation délicate. Pour faciliter celle-ci, la plaque 5 est reliée à la plaque d'extrémité supérieure 7 par une tige de soutien 11, située dans sa partie centrale, et équipée d'un moyen de levage manuel 12, porté par la plaque 7. Un dispositif de sécurité, non représenté, empêche que, lors du serrage des poussoirs 6, la tige 11 et le dispositif 12 ne supportent des efforts trop importants.

Le répartiteur inférieur 3 est pourvu d'une plaque d'appui 13, identique à la plaque d'appui 5 du répartiteur supérieur. Cette plaque d'appui repose sur la plaque d'extrémité inférieure 8.

Des anneaux de maintien supérieur 14 et inférieur 15, traversés par les tirants 9, maintiennent en position le tube en verre 1 par rapport aux plaques d'extrémité 7 et 8. En outre, ils maintiennent un tube 16 de matière plastique transparente (méthacrylate de méthyle), concentrique au tube en verre 1, de diamètre un peu plus large et qui sert à la fois de protection mécanique, et éventuellement de protection thermique, l'espace entre les deux tubes pouvant éventuellenent être traversé par un fluide de maintien en température.

La plaque d'extrémité supérieure 7 est traversée par un large orifice 16, par lequel passent, d'une part un tube souple 17 d'évacuation du liquide traité, et d'autre part, un tube souple 18 d'alimentation en air comprimé des joints d'étanchéité qu'on verra dans la suite. L'orifice 16 sert également à mettre à l'atmosphère la face supérieure de la plaque d'appui 5.

La plaque d'extrémité 8 est traversée par un passage 19 d'amenée du fluide à traiter, et un passage 19a d'amenée d'air comprimé pour les joints d'étanchéité. On observera que rien ne s'oppose à ce que le sens de circulation soit inversé, soit à dire que le conduit 17 soit un conduit d'amenée, et le passage 19 un passage d'évacuation du fluide.

Bien entendu, des joints d'étanchéité, non représentés, sont prévus aux endroits convenables.

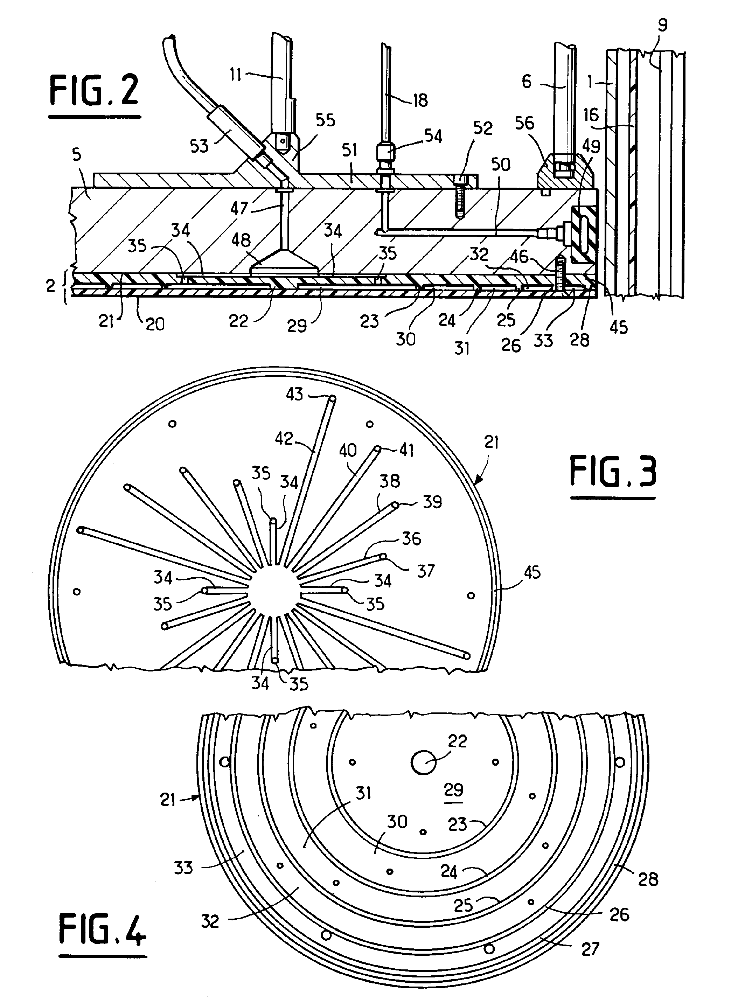

La figure 2 est une coupe partielle plus détaillée d'un mode de réalisation préféré du répartiteur supérieur 2, de sa plaque d'appui 5, et des éléments avoisinants.

Le répartiteur 2 est composé d'un séparateur 20 constitué d'une simple plaque circulaire de polypropylène fritté, et d'une plaque répartitrice 21 formée d'une plaque de matière plastique rigide, dont la face inférieure, c'est-à-dire celle qui est en contact avec le séparateur 20, est représentée à la figure 4. Cette face inférieure comprend des parties en saillie, toutes dans un même plan, et qui assurent le contact avec le séparateur 20, et des parties en creux, également toutes dans un même plan. Les parties en saillie comprennent un saillant central 22, circulaire, et une série de nervures annnulaires concentriques 23, 24, 25, 26, ainsi qu'une nervure de bord 27. Le saillant central 22, circulaire, de petit diamètre, occupe à peu près 1/1000 de la surface totale de la plaque distributrice. Les nervures circulaires 23 à 26 sont de faibles largeurs, elles occupent, ensemble, environ 1/100 de la surface totale de la plaque répartitrice. La nervure de bord 27 est un peu plus large, elle est associée sur son bord interne à un joint d'étanchéité 28.

Le saillant 22 et les nervures 23 à 27 définissent entre eux des canaux 29, 30, 31, 32, 33 qui sont limités à leur partie supérieure par le corps de la plaque répartitrice, et à leur partie inférieure par. le séparateur 20. En coupe radiale, comme le montre la figure 2, leur section est rectangulaire, avec une hauteur constante, et une largeur qui dépend de la position relative du saillant 22 et des différentes nervures. La position de ces nervures, et le rayon du saillant 22, sont calculés pour que l'aire des différents canaux mesurée dans le plan de contact du séparateur 20 et de la plaque répartitrice 21 soit la même d'un canal à l'autre. Ceci impose que, pour chacun des canaux, la différence (Re2 - Ri2) soit constante, Re et Ri représentant le rayon du bord interne et du bord externe du canal, mesuré à partir de l'axe de la plaque répartitrice.

Le calcul de l'implantation du saillant central et des différentes nervures ne pose aucune difficulté du point de vue mathématique. Le nombre des nervures est déterminé par des considérations mécaniques, il faut en effet qu'elles soient en nombre suffisant pour s'opposer à toute déformation du séparateur 20.

La face supérieure de la plaque répartitrice 21 est représentée à la figure 3. Elle est plane dans son ensemble, mais présente une série de rainures disposées en étoile, ces rainures étant de section identique, mais de longueurs variables. Quatre premières rainures 34, vont depuis la région centrale jusqu'à un passage transversal 35, qui traverse la plaque et débouchent dans le fond du premier canal 29 en partant du centre. Quatre autres rainures 36 sont reliées de même à des passages 37 débouchant dans le fond du second canal 30. Des rainures similaires 38, 40, 42, de longueurs croissantes, sont, de la même manière, reliées à des passages 39, 41, 43 débouchant respectivement dans les canaux suivants 31, 32, 33. Chaque groupe de quatre nervures de même longueur forme une étoile à quatre branches, si bien que les passages débouchant dans le fond des canaux successifs sont répartis de façon régulière.

Les passages 35, 37, 39, 41, 43 ne sont pas identiques entre eux. Leur section est calculée pour que la perte de charge introduite depuis la cuvette centrale 44 jusqu'au canal 29 à 33 correspondant soit la même pour tous les canaux. On obtient ainsi des conditions de pression et débit uniformes pour tous les canaux, c'est-à-dire sensiblement pour toute la surface du séparateur. Les minimes écarts sont comblés grâce à la perméabilité du séparateur, qui joue un rôle de diffuseur. La section propre des canaux 29 à 33 est assez grande pour ne pas perturber cette uniformité. On doit se souvenir, en effet, que les vitesses d'écoulement, dans une installation de chromatographie, sont très faibles.

Les passages 35, 37, 41, 43 sont, dans l'exemple décrit, simplement forés à travers la plaque répartitrice 21. On pourrait aussi prévoir des étranglements calibrés mis en place dans des orifices forés à l'avance. Cette variante plus compliquée permettrait de modifier les pertes de charges en fonction des conditions de travail pour obtenir toujours une égalisation optimale des pressions et débits dans le séparateur et donc dans l'espace de travail 4.

Les différentes rainures convergent vers le centre dans une zone de répartition centrale 44, formant une sorte de cuvette. Le saillant central 22 prévu sur la face opposée a pour utilité d'éviter un trop grand affaiblissement mécanique de cette zone.

Près de son bord périphérique, la face supérieure de la plaque répartitrice 21 est pourvue d'un joint d'étanchéité annnulaire 45, analogue au joint d'étanchéité 28. Des vis 46 traversent, à la fois, le séparateur 20 et la plaque répartitrice 21, et sont fixées dans la plaque d'appui 5, notablement plus épaisse. Cette plaque d'appui, qui est cylindrique, avec un rayon sensiblement égal à celui du répartiteur 2, est en contact avec la face supérieure de la plaque répartitrice 21 sur la partie de sa surface qui n'est pas occupée par les rainures ou par la cuvette centrale 44. A sa partie centrale, la plaque d'appui 5 est traversée par un canal de fluide 47, disposé axialement, et qui débouche à la partie inférieure dans un entonnoir de répartition 48, qui fait face à la cuvette 44.

Sur ses bords périphériques, la plaque 5 présente une rainure circulaire dans laquelle est logé un joint 49 formé d'une chambre annulaire, gonflable à l'air comprimé, l'air comprimé étant amené par l'intermédiaire d'un conduit 50, ménagé dans l'épaisseur de la plaque 5. Les dimensions du joint 49 sont calculées pour qu'il puisse, en toute éventualité, assurer une étanchéité correcte de l'espace intérieur 4 par rapport à l'extérieur, même au cas où la plaque 5 se trouverait légèrement oblique par rapport à l'axe. Sur la figure 2, le joint 49 est représenté à l'état dégonflé. Une pièce de jonction et d'accrochage 51 est fixée, par l'intermédiaire de vis 52, sur la face supérieure de la plaque 5. Cette pièce 51 porte un raccord 53 au tube souple 17 d'évacuation du liquide, ce raccord 53 étant, bien entendu, relié au passage axial 47. Elle porte aussi un raccord 54 au conduit souple 18, qui sert à alimenter en air comprimé le joint gonflable 49 par l'intermédiaire du passage 50. En outre, elle porte le moyen d'accrochage 55 de la tige de soutien 11. Le jeu nécessaire pour empêcher des efforts exagérés sur la tige 11 peut être contenu dans le dispositif d'accrochage 55, comme il peut être dans le moyen d'actionnement 12, représenté à la figure 1.

On a représenté en 56 une pièce d'extrémité du poussoir 6, montée à rotule sur celui-ci, et présentant une surface d'appui sur la plaque 5.

Pour des raisons de simplicité, le répartiteur inférieur 3 et sa plaque d'appui 13 sont absolument identiques au répartiteur supérieur 2 et à sa plaque d'appui 5. Ils sont simplement retournés, le répartiteur 3 étant au-dessus de la plaque d'appui 13, et dans le répartiteur 3, le séparateur étant au-dessus de la plaque répartitrice. Il n'est donc pas nécessaire de les décrire en détail.

Le dispositif qu'on vient de décrire est particulièrement simple tant dans son exécution que dans son maniement, notamment en ce qui concerne le montage et le démontage.

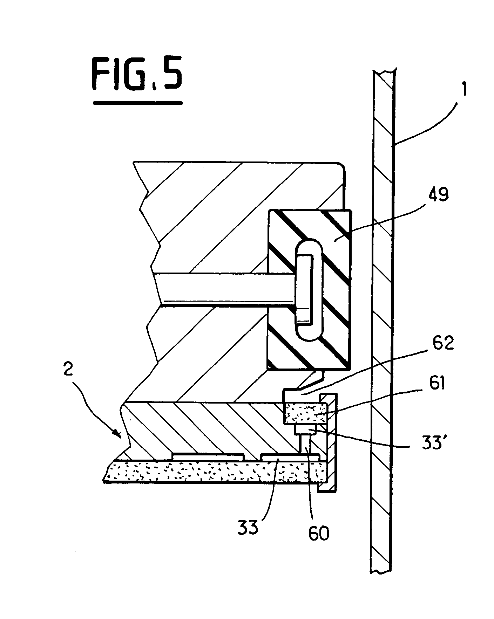

La figure 5 à laquelle on fait maintenant référence représente un détail d'un mode de réalisation avantageux de la présente invention. En effet, il est à noter que dans les modes de réalisation évoqués ci-dessus, il existe une zone dite "morte" délimitée par la partie inférieure du joint gonflable (49), le tube en verre (1) et le piston mobile, laquelle zone morte présente l'inconvénient de ne jamais être drainée par le fluide. Ceci est particulièrement génant lorsque l'on chromatographie à la suite plusieurs produits différents. En effet le nettoyage qui est effectué entre deux séries de produits différents n'est pas efficace dans cette zone morte. Ainsi dans ce mode de réalisation de la fig 5 on réalise des trous (60) communiquant avec le canal périphérique (33) du répartiteur et débouchant sur la partie latérale du piston par une gorge périphérique (62), au travers d'un filtre (61), et disposée en-dessous du joint gonflable (49), assurant ainsi une distribution latérale du fluide dans ladite zone morte, lesdits trous étant répartis sur l'ensemble de la périphérie du répartiteur. L'avantage obtenu sera d'autant plus grand que cette distribution latérale sera réalisée très près du joint gonflable (49). A titre d'exemple le diamètre des trous peut être de l'ordre de 1 mm, mais ne doit pas introduire de pertes de charges importantes. D'autre part, suivant l'invention, la surface cumulée des canaux référencés 33 et 33' (33' étant le canal débouchant sur la gorge périphérique au travers du filtre 61)est égale à la surface des autres canaux 29, 30, 31, 32.

## Revendications

1. Répartiteur de fluide destiné à assurer une répartition uniforme des pressions et débits sur la section d'un écoulement dudit fluide, ce répartiteur comportant un séparateur (20), formé d'une plaque de matière poreuse à porosité ouverte, et une plaque répartitrice circulaire (21), en appui que le séparateur comportant au moins un canal ouvert sur sa face tournée vers le séparateur et étant traversée par un ou plusieurs conduits reliant ledit canal ou lesdits canaux à une conduite d'alimentation ou d'évacuation unique située sur la face opposée, le ou lesdits conduits (34 à 43) reliant les canaux à la conduite d'alimentation ou d'évacuation introduisant, entre ladite conduite et le canal correspondant, une perte de charge, inversement proportionnelle à l'aire du canal correspondant, mesurée sur la surface du séparateur, caractérisé en ce que lesdits canaux sont circulaires, concentriques, distincts et séparés par des surfaces d'appui (22 à 27) du séparateur (20), les conduits reliant les canaux à la conduite d'alimentation ou d'évacuation comprenant des rainures (34, 36, 38, 40, 42) en étoile creusées dans la face de la plaque répartitrice qui est opposée au séparateur, ces rainures étant recouvertes par une plaque d'appui (5) en contact avec la plaque répartitrice, et les conduits comprennent, en outre, des passages (35, 37, 39, 41, 43) perpendiculaires à la plaque répartitrice, débouchant d'un côté dans une rainure et de l'autre côté dans un canal.

2. Répartiteur selon la revendication 1, caractérisé en ce que lesdits passages ont une section plus faible que les rainures dans lesquelles ils débouchent.

3. Répartiteur selon la revendication 1 ou 2, caractérisé en ce que lesdits passages sont pourvus d'ajustages interchangeables pour permettre d'ajuster la perte de charge dans le conduit correspondant.

4. Répartiteur selon l'une des revendications 1 à 3, caractérisé en ce que les aires des canaux (29 à 33) sont égales entre elles, et les pertes de charges introduites par les conduites sont égales entre elles.

5. Dispositif de traitement d'un fluide comprenant une enceinte cylindrique (1) fermée par deux répartiteurs (2, 3), caractérisé en ce que les répartiteurs sont conformes à l'une des revendications 1 à 4 et disposés avec leurs séparateurs en vis-à-vis.

6. Dispositif selon la revendication 5, caractérisé en ce que pour faciliter le démontage et le réglage des dimensions de l'enceinte, chaque répartiteur est fixé sur une plaque d'appui (3) pourvue d'un joint gonflable (49) assurant l'étanchéité avec la paroi latérale de l'enceinte.

7. Dispositif selon l'une des revendications 5 ou 6, et constituant un chromatographe disposé verticalement dans lequel l'espace (4) compris entre les deux séparateurs contient une masse de matière pour chromatographe, caractérisé en ce que le répartiteur supérieur est fixé sur une plaque (5) qui peut être portée par une tige de soutien centrale (11) avec un jeu qui correspond à la compressibilité de la masse de matière pour chromatographe, et des poussoirs verticaux (6) disposés vers la périphérie de cette plaque assurent un serrage convenable de ladite masse.

8. Dispositif selon l'une des revendications 6 ou 7 caractérisé en ce que l'on réalise des trous (60) communiquant avec le canal périphérique (33) du répartiteur (2) et débouchant sur la partie latérale du piston mobile en-dessous du joint gonflable (49), lesdits trous étant répartis sur l'ensemble de la périphérie du répartiteur.

## Patentansprüche

1. Flüssigkeitsverteiler zur gleichmäßigen Verteilung der Drücke und Durchflußmenge auf den Querschnitt eines Stroms der genannten Flüssigkeit, wobei dieser Verteiler aus einem Separator (20), der von einer Platte aus porösem Material mit offener Porosität gebildet wird, und einer runden Verteilerplatte (21) besteht, die auf dem Separator aufliegt, mindestens einen offenen Kanal auf ihrer dem Separator zugekehrten Seite aufweist und von einer oder mehreren Leitungen durchquert wird, die den genannten Kanal oder die genannten Kanäle mit einer einzigen, an der anderen Seite angeordneten Versorgungs- bzw. Entleerungsleitung verbinden, wobei die genannte Leitung oder genannten Leitungen (34 bis 43) die Kanäle mit der Versorgungs- bzw. Entleerungsleitung verbinden, wobei sie zwischen der genannten Leitung und dem entsprechenden Kanal einen Druckverlust erzeugen, der sich umgekehrt proportional zur Grundfläche des entsprechenden Kanals verhält, die auf der Oberfläche des Separators gemessen wird,
dadurch gekennzeichnet, daß die genannten Kanäle kreisrund, konzentrisch, unterschiedlich und durch Auflageflächen (22 bis 27) vom Separator (20) getrennt sind, wobei die Leitungen, die die Kanäle mit der Versorgungs- bzw. Entleerungsleitung verbinden, aus Rillen (34, 36, 38, 40, 42) bestehen, die sternförmig in der vom Separator abgewandten Seite der Verteilerplatte ausgespart sind, wobei diese Rillen von einer Auflageplatte (5) bedeckt werden, die sich mit der Verteilerplatte in Berührung befindet, wobei die Leitungen des weiteren aus Durchgängen (35, 37, 39, 41, 43) bestehen, die senkrecht zur Verteilerplatte liegen und auf der einen Seite in eine Rille und auf der anderen Seite in einen Kanal münden.

2. Verteiler nach Anspruch 1,
dadurch gekennzeichnet, daß die genannten Durchgänge einen kleineren Querschnitt haben als die Rillen, in die sie münden.

3. Verteiler nach Anspruch 1 oder 2,
dadurch gekennzeichnet, daß die genannten Durchgänge mit untereinander austauschbaren Justierungen versehen sind, um ein Einstellen des Druckverlusts in der entsprechenden Leitung zu ermöglichen.

4. Verteiler nach einem der Ansprüche 1 bis 3,
dadurch gekennzeichnet, daß die Grundflächen der Kanäle gleich groß sind, und die durch die Leitungen erzeugten Druckverluste gleich groß sind.

5. Flüssigkeitsbehandlungsvorrichtung, bestehend aus einer zylindrischen Einfassung (1), die von zwei Verteilern (2, 3) abgeschlossen ist,
dadurch gekennzeichnet, daß die Verteiler einem der Ansprüche 1 bis 4 entsprechen und mit ihren Separatoren einander gegenüber angeordnet sind.

6. Vorrichtung nach Anspruch 5,
dadurch gekennzeichnet, daß zur Erleichterung des Ausbaus und der Einstellung der Abmessungen der Einfassung jeder Verteiler an einer Auflageplatte (3) befestigt ist, die mit einer aufblasbaren Dichtung (49) versehen ist, die die Dichtigkeit zur Seitenwand der Einfassung gewährleistet.

7. Vorrichtung nach einem der Ansprüche 5 oder 6, die einen senkrecht angeordneten Chromatographen bildet, bei dem der Raum (4) zwischen den beiden Separatoren eine Masse an Chromatographiematerial enthält,
dadurch gekennzeichnet, daß der obere Verteiler an einer Platte (5) befestigt ist, die von einer zentralen Tragstange (11) mit einem Spiel gehalten werden kann, das der Zusammenpreßbarkeit der Masse an Chromatographiematerial entspricht, und senkrechte Stößel (6), die zur Umfangslinie dieser Platte hin angeordnet sind, ein geeignetes Pressen der genannten Masse gewährleisten.

8. Vorrichtung nach einem der Ansprüche 6 oder 7,
dadurch gekennzeichnet, daß Löcher (60) ausgeführt werden, die mit dem Umfangskanal (33) des Verteilers (2) in Verbindung stehen und unterhalb der aufblasbaren Dichtung (49) im seitlichen Bereich des beweglichen Kolbens münden, wobei die genannten Löcher über den gesamten Umfang des Verteilers verteilt sind.

## Claims

1. Fluid distributor intended to ensure a uniform distribution of the pressures and flow rates over the cross-section of a stream of the said fluid, this distributor comprising a separator (20) consisting of a plate of porous material with open porosity, and a circular distribution plate (21) bearing on the separator comprising at least one open channel on its side facing the separator, and being crossed by one or more conduits connecting said channel or channels to one or more feed or discharge line situated on the opposite side, said conduit or conduits (34 to 43) connecting the channels to the feed or discharge line, introducing, between said line and the corresponding channel a loss of load which is inversely proportional to the surface of the corresponding channel, measured on the separator surface, characterized in that said channels are circular, concentric, distinct and separated by bearing surfaces (22 to 27) of the separator (20), the conduits connecting the channels to the feed or discharge line comprising star-shaped grooves (34, 36, 38, 40, 42) hollowed out in the side of the distribution plate which faces away from the separator, these grooves being covered by a support plate (5) in contact with the distribution plate, and the conduits additionally comprise passages (35, 37, 39, 41, 43) perpendicular to the distribution plate, opening into a groove on the one side and into a channel on the other side.

2. Distributor according to claim 1, characterized in that the said passages have a cross-section which is smaller than the grooves into which they open out.

3. Distributor according to claim 1 or 2, characterized in that said passages are provided with interchangeable nozzles to permit the pressure drop in the corresponding conduit to be adjusted.

4. Distributor according to one of claims 1 to 3, characterized in that the areas of the channels (29 to 33) are equal to each other and the pressure drops introduced by the conduits are equal to each other.

5. Device for treating a fluid, comprising a cylindrical enclosure (1) closed by two distributors (2, 3), characterized in that the distributors are in accordance with one of claims 1 to 4 and are arranged with their separators facing each other.

6. Device according to claim 5, characterized in that in order to facilitate the dismantling and the adjustment of the dimensions of the enclosure, each distributor is fastened to a support plate (3) provided with an inflatable seal (49) ensuring sealing to the side wall of the enclosure.

7. Device according to either of claims 5 or 6 and forming a chromatograph arranged vertically, in which the volume (4) included between the two separators contains a mass of chromatography material, characterized in that the upper distributor is fastened to a plate (5) which can be carried by a central supporting rod (11) with a clearance which corresponds to the compressibility of the mass of chromatography material, and vertical tamping rods (6) arranged near the periphery of this plate ensure an appropriate clamping of the said mass.

8. Device according to either one of claims 6 or 7, characterized in that holes (60) are made which communicate with the peripheral channel (33) of the distributor (2) and emerge on the lateral wall of the movable plunger under the inflatable seal (49), said holes being distributed on the whole periphery of the distributor.
